**Europäisches Patentamt**

**European Patent Office**

**Office européen des brevets**

(19)

(11) Publication number: **0 085 666**

**A2**

(12) # EUROPEAN PATENT APPLICATION

(21) Application number: **83850023.9**

(22) Date of filing: **02.02.83**

(51) Int. Cl.³: **C 01 B 17/90**
**C 01 G 49/14**

(30) Priority: **03.02.82 DK 466/82**

(43) Date of publication of application:
**10.08.83 Bulletin 83/32**

(84) Designated Contracting States:
**BE DE FR GB IT NL**

(71) Applicant: **A/S NIRO ATOMIZER**
**No. 305 Gladsaxevej**
**DK-2860 Soeborg(DK)**

(72) Inventor: **Hansen, Ove Emil**
**No. 261 Skovgards Allé**
**DK-3500 Vaerlose(DK)**

(74) Representative: **Halldin, Bo et al,**
**Dr. Ludwig Brann Patentbyra AB Kungsgatan 3 P.O. Box**
**7524**
**S-103 92 Stockholm(SE)**

(54) **Method of processing sulfuric acid having a content of metal sulfates.**

(57) Waste sulfuric acid having a content of metal sulfate is spray dried in a drying chamber into which metal oxide is injected. Thereby free acid is neutralized and water evaporated to produce metal sulfate as a dry powder.

The dry metal sulfate powder may be calcined to form sulfur oxides to be used in manufacture of sulfuric acid, and metal oxide, a part of which may be used in the process for neutralizing further amounts of waste sulfuric acid.

EP 0 085 666 A2

Croydon Printing Company Ltd.

BACKGROUND OF THE INVENTION:

Field of the invention.

The invention relates to a method of processing sulfuric acid having a content of metal sulfates, according to which the sulfuric acid is fed to a spray drier where it is sprayed into a hot gas.

Sulfuric acid having a content of metal sulfates occurs in large quantities as a waste product in the preparation of titanium dioxide by the sulfate process and from pickling baths for cleaning metals, e.g. removing oxide scale from iron plates. Typically, waste acid from titanium dioxide production contains about 20% by weight of sulfuric acid and 10-20% by weight of dissolved salts, of which a substantial part is iron sulfate.

The discharge of the waste acid is a serious problem and various processes have, therefore, been proposed for working up said waste acid into products which can be discharged or reused.

Prior Art.

The U.S. patent specification No.3,713,786 contains a survey of such processes. In the process according to said patent specification, the sulfuric acid-containing solution of metal salts is sprayed into a hot air stream until the practically complete evaporation of water and sulfuric acid which, according to said specification, can take place without decomposition of the latter. The vapors thus produced are condensed under controlled conditions to obtain sulfuric acid in a relatively concentrated form, while the metal salts produced by the spray evaporation are in substantially dry form. Said spray evaporation takes place at high temperatures. The patent specification indicates that the temperature of the exhaust gas from the spray evaporation reaches about 350-400°C. This renders the said process rather energy-consuming and it makes heavy demands on the apparatus.

SUMMERY OF THE INVENTION:

The object of the invention is therefore to provide a process of the kind mentioned in the first paragraph of the present specification which is less energy-consuming and does not make so heavy demands on the apparatus.

This is achieved by a process comprising the combination of features set forth in the attached claims.

The statement contained in this claim to the effect that the metal oxides shall correspond to the metal sulfates present in the sulfuric acid means that they must be oxides of the same metals as those forming the cations belonging to the sulfates, but the oxidation step of the metal in the oxides need not be the same as in the sulfates.

In the process according to the invention, the total amount of sulfuric acid reacts with the metal oxides to form sulfates and, in contrast to what happens in the process disclosed in the above-mentioned U.S. patent specification, it is only the water present in the original acid which passes into the vapor phase.

The sulfates produced by the reaction form, together with the sulfates originally present, particles which may possibly be partly removed from the bottom of the spray drier, while particles which are not removed there are fed with the drying gas to a powder separator which may be a cyclone, an electrofilter or the like but which, preferably, is a filter provided with a filter cloth, as this last-mentioned filter allows an adequate contact between non-reacted oxide and acid droplets.

The metal oxide containing powder which is introduced into the spray drier is supplied preferably together with the drying air through an air distributor disposed at the top of the spray drier in order to provide an adequate contact between the sprayed acid droplets and the powder.

A particularly advantageous feature of the process according to the invention is that the resulting
sulfate-containing powder can by heating (in the
following called calcining) decompose to release sulfur
oxides while producing metal oxide which can be dis-
charged or recycled as a dry powder to the spray drier,
so that the process as a whole does not require supply
of metal oxides.  As an alternative, a part, or the
total amount of the metal oxide produced by the decomposition can be discharged or recovered.  The sulfur
oxides released by the decomposition may, for instance,
be used for producing sulfuric acid or ammonium sulfate.
Said decomposition of the sulfate may be performed e.g.
as disclosed in US patent specification 3,195,981.

BRIEF DESCRIPTION OF THE DRAWINGS:

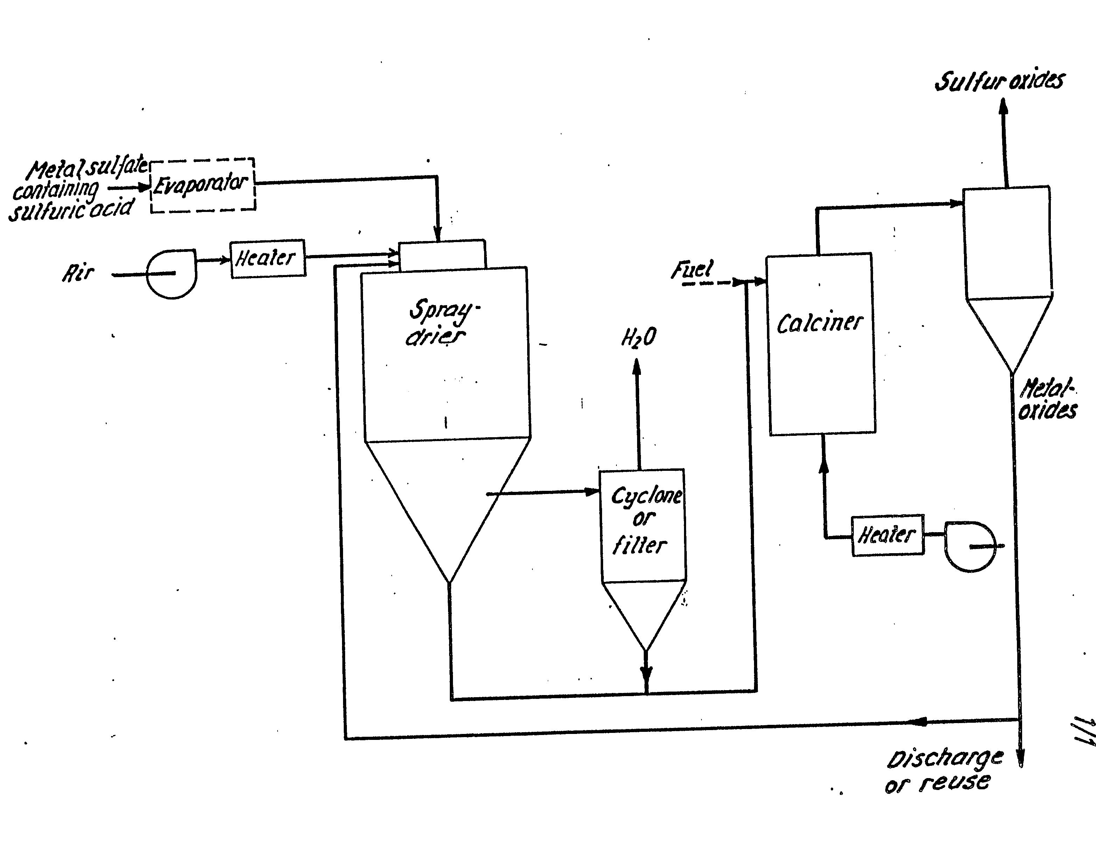

In the following, the process will be explained in
more detail with reference to the drawing showing a
schematic diagram of a preferred embodiment of the
process.

DESCRIPTION OF PREFERRED EMBODIMENTS:

As indicated in the drawing, an evaporation of the
metal sulfate-containing sulfuric acid is carried out
if appropiate.  In typical cases, the metal sulfates in
question will be ferrous and ferric sulfate, and the
evaporation is suitably performed until a concentration
of these sulfates of 20-60% by weight, based on the
weight of the solution, is achieved, and so that the
strength of the sulfuric acid, calculated as the weight
ratio $H_2SO_4/H_2SO_4 + H_2O$, is 50-75% by weight.  This
possibly evaporated metal sulfate-containing sulfuric
acid is sprayed in the upper part of the spray drier,
and through a distributor disposed above the spray
aggregate hot air and metal oxide, in the said typical
case iron oxide, originating from the calcining
described below, are injected.

In the embodiment shown, part of the powder consisting mainly of sulfate is removed from the bottom of the
spray drier, while the remainder is supplied to a
particle separator shown as a cyclone or a filter.  The air with the amount of $H_2O$ originally present in the acid is released therefrom, while the sulfate-containing powder is removed and combined with the powder removed from the spray drier and supplied to a calcining unit where it is decomposed       by heating with hot air and led with the hot air stream to another particle separator (cyclone, electrofilter or the like). The gas stream leaving this last-mentioned particle separator will possibly have a very high content of sulfur oxides and therefore, be suitable for the production of $H_2SO_4$ or $(NH_4)_2SO_4$. In said second particle separator, a powder consisting mainly of metal oxide, iron oxides in said most typical cases, is produced, and said powder is preferably recycled totally or partly to the spray drier. As an alternative, part of said powder may be used for another technical purpose or discharged.

The metal oxides which are recycled from said second separator to the spray drier have a high temperature, and this makes it possible to reach the required exhaust temperature of the gas from the spray drier with a reduced energy consumption for heating the drying air supplied to the spray drier, whereby part of the energy consumed for the calcining is recovered.

As examples of parameters for carrying out the process, may be mentioned that for recovering about 3000 kg of waste acid per hour corresponding to

    1150 kg/h $H_2SO_4$

    493 kg/h $H_2O$

    1350 kg/h metal sulfate (with 1 mole of water of crystallization), essentially Fe

corresponding to an acid strength (as defined above) of 70% by weight and a metal sulfate content of 45% by weight, an inlet temperature of the drying air to the spray drier of 550°C and an exhaust temperature of the air from said drier of 150°C may be used. In this case, 1200 kg of metal oxides will be recycled to be injected as powder in the spray drier.

We claim:

1.    A method of processing sulfuric acid having a content of metal sulfate, comprising the steps of

(a) atomizing said sulfuric acid into a hot gas in a spray drier;

(b) withdrawing the hot gas from the spray drier at a temperature of 120-180$^{\circ}$C;

(c) injecting dry powder comprising metal oxide  corresponding to the metal sulfate to achieve contact between the atomized acid and said powder, which powder is injected in an amount corresponding at least to the stoichiometric amount in respect to conversion of the acid into metal sulfate; and

(d) recovering a powder of metal sulfate from the spray drier.

2.    The method of claim 1 wherein the metal sulfate contained in the acid is mainly in the form of ferrous and ferric sulfate in an amount of 20-60% by weight based on the weight of the solution, and that the strenght of the sulfuric acid (weight ratio $\dfrac{H_2SO_4}{H_2SO_4 + H_2O}$ ) is

50-75% by weight.

3.    The method of claim 1 or 2 wherein the ratio between the supplied amount of metal oxide and sulfuric acid is 1.1-1.5 times greater than the ratio corresponding to the stoichiometric ratio in respect to the conversion of the total amount of acid into sulfate.

4.    A method of processing sulfuric acid having a content of metal sulfate, comprising the steps of

(a) atomizing said sulfuric acid into a hot gas in a spray drier;

(b) withdrawing the hot gas from the spray drier at a temperature of 120-180$^{\circ}$C;

(c) injecting dry powder comprising metal oxide  corresponding to the metal sulfate to achieve contact between the atomized acid and said powder, which powder is injected in an amount corresponding at least to the stoichiometric amount in respect to conversion of the acid into metal sulfate;

(d) recovering a powder of metal sulfate from the spray drier;

(e) calcining the powder of metal sulfate recovered from the spray drier to form metal oxide and sulfur oxides; and

(f) utilizing at least a portion of the metal oxide thus produced for injection into the spray drier in step (c).

5. The method of claims 1 or 4 wherein by the recovering in step (d) at least a portion of the powder of metal sulfate leaves the spray drier entrained in the hot gas withdrawn therefrom and is collected from said gas by means of a particle collector provided with a fabric filter.

Metal sulfate containing sulfuric acid

Evaporator

Air

Heater

Spray-drier

Cyclone or filter

$H_2O$

Fuel

Calciner

Heater

Sulfur oxides

Metal-oxides

Discharge or reuse

0085666

1/1